# EUROPEAN PATENT SPECIFICATION

(11) **EP 2 746 958 B1**
(45) Date of publication and mention of the grant of the patent: **16.08.2017**
(21) Application number: 12382510.1
(22) Date of filing: 18.12.2012
(51) Int. Cl.: G06F 13/36

(54) **METHOD AND SYSTEM OF CACHING WEB CONTENT IN A HARD DISK**
VERFAHREN UND SYSTEM ZUM ZWISCHENSPEICHERN VON WEBINHALTEN AUF EINER FESTPLATTE
PROCÉDÉ ET SYSTÈME PERMETTANT DE METTRE EN MÉMOIRE CACHE LE CONTENU WEB SUR UN DISQUE DUR

(43) Date of publication of application: 25.06.2014
(73) Proprietor: Telefonica S.A., 28013 Madrid (ES)
(72) Inventor: Yang, Xiaoyuan, 08019 Barcelona (ES); Levi, Martin Iván, 08019 Barcelona (ES); Astiz Lezaun, Eguzki, 08019 Barcelona (ES); Garcia Sanchez Mendoza, Armando Antonio, 08019 Barcelona (ES); Guijarro Guillen, David, 08019 Barcelona (ES); Pando Cao, Arcadio, 08019 Barcelona (ES); Burrel Diez, Maite, 08019 Barcelona (ES); Conejero Olesti, David, 08019 Barcelona (ES)
(74) Representative: Carpintero Lopez, Francisco

(56) References cited:
- EP-A2- 0 805 593
- US-A1- 2006 259 568
- HONGYAN LI ET AL: "Regional Scheduler: A Region-based High Efficient Solid State Drive Scheduler", COMPUTATIONAL SCIENCE AND ENGINEERING (CSE), 2012 IEEE 15TH INTERNATIONAL CONFERENCE ON, IEEE, 5 December 2012 (2012-12-05), pages 516-523, XP032315164, DOI: 10.1109/ICCSE.2012.77 ISBN: 978-1-4673-5165-2

## Description

### Field of the invention

The present invention has its application within the telecommunication sector, and especially, in the area of web content provisioning.

### Background of the invention

In order to minimize delivery delays when a user request a web content to an internet server, communication networks are typically distributed in a system of intermediate nodes. Instead of delivering the requested web content directly from the server to the end user, the requested context is cached in the intermediate nodes. However, the storing capacity of the intermediate nodes is limited, and not all the information from every server can be duplicated in every single node. For this reason, the data stored in a node is constantly updated in an effort to comprise the most popular and request web content, typically following a Least Recently Used (LRU) replacing policy.

In order to maximize the speed at which the node provide cached web content to an end user, the nodes typically comprise two different kinds of storage media: a fast Random Access Memory (RAM), and a slower hard disk (HD). If the node needs to deliver content from the hard disk, the web caching system of the node needs to first store the requested content in the RAM, replacing any other contents stored in the RAM to free the required space. Therefore, the web caching system of the node constantly reorganizes web content in both storage media, in an effort to keep the most popular content in the RAM, and the rest of the popular content in the HD. Also, content downloaded from the server through the RAM of the node needs to be copied to the HD to minimize data loss in case of power outages.

HD management systems are required to handle simultaneously read and write operations. Since conventional web caching systems treat both types of operations equally, read requests can be delayed when operating under heavy activity. As users only perceive the delay in read operations, but are unaware of when writing operations occur in the HD, this results in a deterioration of the overall performance perceived by the user.

Several proposals have been made in order to increase the performance of hard disk based storage systems and reduce the average delay suffered in the provisioning of a web content requested by a user. For example, the performance of a hard disk strongly depends on how the mechanical read and write headers are moved across the disk to fetch and write data. For this reason, various scheduling policies have been proposed to optimize the aggregated disk throughput, such as SCAN (elevator algorithm), FCFS (First come first serve) and SSTF (Shortest seek time first). For real time applications, Earliest Deadline First (EDF) policies are typically applied. However, these policies are designed for general purposes and do not take into account the specific characteristics of the web content being read/written in intermediate nodes, and therefore, they do not optimize user experience in web caching systems.

A different strategy to optimize HD performance is to improve the hardware performance of the device, using faster storage technologies. For example, US 2010/0199036 A1 presents a hierarchical classification of multiple hard disks, sorted according to their access rate. The most popular data is therefore allocated in the fastest hard disks, thus minimizing the average delay of a read request. Also, US 2010/0235569 A1 optimizes a solid state memory lifespan by distributing write operations fairly across the physical memory, avoiding hot spots that may damage the device. These techniques are transparent to the web caching scheduling, and therefore compatible with any web caching system.

Various object replacement schemes have been devised to replace basic LRU algorithms and optimize the data that is kept in a memory when said memory becomes saturated and new data needs to be written. For example, US 6,266,742 B1 maximizes the efficiency of caching systems by using a metric that takes into account access frequency, size, lifetime and time to fetch of an object. US 6,425,057 B1 propose the inclusion of a probability function to evaluate the cost of keeping or replacing an object in the cache. US 6,772,199 B1 allow applications to define the criteria for cache replacement. These techniques improve cache memory usage by optimizing the data that is stored in the memory, but do not affect the time required to access said memory in a read operation. Therefore, read operations can still be delayed by write operations in scenarios of heavy activity, and the user experience can be degraded.

On the other hand, an example of scheduler for optimizing HD performance is described by Hongyan Li et al. in "Regional Scheduler: A Region-based High Efficient Solid State Drive Scheduler", Computational Science and Engineering (CSE), 2012 IEEE 15th International Conference on, IEEE, December 2012, p.p. 516-523. Hongyan Li et al. describes the problem of the available I/O schedulers in Linux kernel designed under underlying traditional rotating HDDs, which can lead their performance to be sub optimal when working with emerging Solid State Drives (SSD). Hongyan Li et al. discloses a SSD scheduler, in which the entire SSD space is partitioned into several regions as basic scheduling units. The SSD scheduler gives preference to read requests over writes to take advantage of the fact that reads are much faster than writes, avoiding excessive read-blocked by-write interference. Within each region's scheduling queue, write requests are sorted before issuing them, improving SSD's lifetime because of the successful transformation of random writes to sequential writes.

Therefore, there is a need in the state of the art for a method and system of caching web content in intermediate nodes equipped with hard disks that improve the average delay of web content delivery to a user, regardless of the hardware architecture and the replacing policy of said node.

### Summary of the invention

The current invention solves the aforementioned problems by disclosing a method (as in claim 1), system (as in claim 6) and computer program (as in claim 11) that prioritizes read operations versus write operations, therefore reducing the delay suffered by web content retrieval requests and improving the user experience.

With the disclosed method, system, and computer program, the average time required to deliver any web content cached in the hard disk of an intermediate node is reduced, optimizing the user experience provided by the web caching service. Additionally, the disclosed invention can be applied to any hard-disk-based web caching system, since it is completely independent of hardware characteristics, allocation criteria, and replacement schemes. These and other advantages will be apparent in the light of the detailed description of the invention.

### Description of the drawings

For the purpose of aiding the understanding of the characteristics of the invention, according to a preferred practical embodiment thereof and in order to complement this description, the following figures are attached as an integral part thereof, having an illustrative and nonlimiting character:
Figure 1 shows a schematic of a conventional intermediate node for web caching.
Figure 2 presents a schematic of an intermediate node for web caching comprising a preferred embodiment of the system of the invention.
Figure 3 is a flow diagram dealing with a new read request, according to a preferred embodiment of the method of the invention.
Figure 4 shows a scheme of the queuing and scheduling system according to a preferred embodiment of the system of the invention.

### Preferred embodiment of the invention

The matters defined in this detailed description are provided to assist in a comprehensive understanding of the invention. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

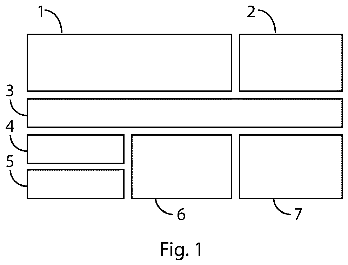

Figure 1 presents the architecture of a conventional intermediate node for web content caching in a communication network. The node comprises a web caching application (1), which is in charge of managing web content requests from users, requesting web content to a remote server, and generating read and write requests to the data storage media of the node, that is, a RAM memory and a hard disk. The node may also comprise any other additional application (2). The node further comprises kernel application programming interfaces (3) to manage the different resources of the operating system of the node, such as a central processing unit (CPU) scheduler (7). Both the web caching application (1) and any other additional application (2) share the system memory through a memory manager (6) that also implements, typically, virtual memory and memory access protection. All devices are accessed through specific device drivers (4). A file system (5) manages all hard disks and offers the logical new of disks, in form of files and directories.

In conventional web caching systems, in order to access files in hard disks, the web caching application (1) calls different kernel APIs (3), but all calls are treated uniformly because operating systems are typically designed to provide a fair service to all applications. Being agnostic to the characteristics of each application, web caching applications (1) implemented in conventional storage systems can suffer unnecessary response time degradations due to sudden disk write operations.

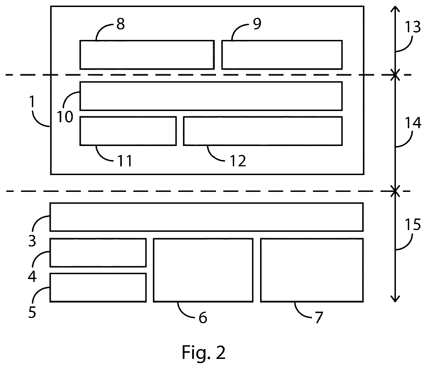

Figure 2 presents a schematic of a web caching application (1) implemented in an intermediate node according to the system and method of the invention. The invention uses a conventional web caching network delivery plane (13) while only affecting the web caching object management (14). The operating system plane (15) is also unaffected by the invention. As any other web caching system, web caching network delivery plane (13) comprises a request manager (8) and a download manager (9). The request manager (1) is in charge of accepting web content requests (typically hypertext transfer protocol, HTTP, requests) from end users and generating the required answer. The download manager (2) is responsible of generating requests to the origin servers to retrieve web content missing in the intermediate node.

The web caching object management (14) plane comprises a web caching object pool (10), which acts as first scheduling means; a device performance monitor (11), which monitors the data throughput of the hard disk, and therefore its saturation level; and an object persistence manager (12) which acts as second scheduling means.

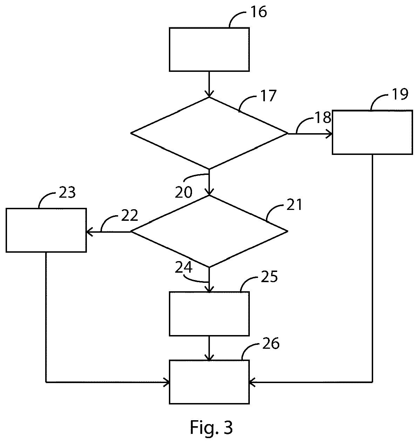

Figure 3 shows in greater detail the operation of the web caching object pool (10). When a request of web content is received (16) at the node, the web caching object pool (10) checks (17) if said web content is cached in the node (either in the RAM or in the hard disk). If the content is not cached (18), a request to the download manager (9) is issued (19), and said download manager (9) requests the web content to the origin servers. The web caching object pool (10) finishes (26) the process until the content is received from the server.

If the requested web content is cached in the node (20), the web caching object pool (10) verifies (21) if said web content is stored in the RAM. If not (22), a request to retrieve the web content is sent (23) to the object persistence manager (12). Otherwise (24), the web content is delivered (25) to the user from the RAM. In both cases, the process at the web caching object pool (10) finishes (26).

Additionally, the web caching object pool (10) manages all stored web content objects in the node, tracks a fixed amount of RAM memory, and keeps the most popular web content cached in the RAM according to any of the object replacement policies for cached data known in the state of the art. When the web caching object pool (10) determines that a web content that is stored in the RAM is to be removed, the web caching object pool (10) checks if the web content object is already stored in the hard disk. If that is the case, the web content is simply removed from the RAM and no further actions are taken. If the object is not stored in the RAM, and according to particular embodiments of the invention, the caching object pool (10) may decide to store it in the hard disk, or not to take further actions, in which case the object is effectively removed from web caching at the node and the next request for said object will generate a new request to the origin server.

Once a web content object is downloaded from the origin server, the download manager (9) informs the web caching object pool (10) of the reception of the new object. The web caching object pool (10) checks if the object has to be cached depending, for example, on HTTP headers and expiring information, or on any other cache management criteria. If the web caching object pool (10) decides to cache the object, the object persistence manager (12) is requested to store the object in the hard disk. Otherwise, the object is only stored in the RAM and no other operation is performed at the hard disk.

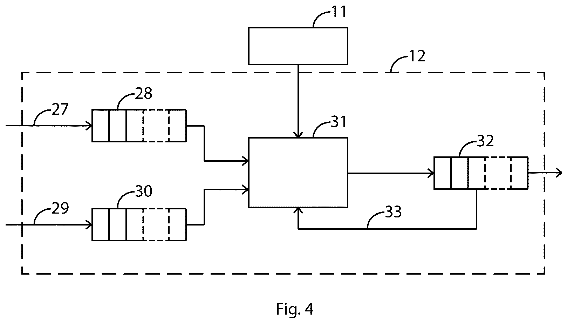

Figure 4 presents the components of the object persistence manager (12) in order to manage write requests (27) and read requests (29) directed towards the hard disk. Write requests (27), that is, requests to store web content in the hard disk, are queued in a first queue (28) by the web caching object pool (10). Read requests (29), that is, requests to retrieve web content from the hard disk are queued in a second queue (30) by the web caching object pool (10), having the second queue (30) a greater priority than the first queue (28). A disk operation scheduler (31) comprised in the object persistence manager (12) receives information about the status of the hard disk, regarding its data throughput and therefore its saturation level, from the device performance monitor (11), and schedules requests queued in the first queue (28) and second queue (30) into a disk operation queue (32). When the throughput of the hard disk is above a given first threshold, that is, when the hard disk is performing many read and/or write operations, no write requests (27) from the first queue (27) are scheduled through the disk operation queue (32), thus giving priority to read requests (29). However, in scenarios with a low operation load at the hard disk, that is, when the hard disk data throughput is below a second threshold, lower than the first threshold, multiple write requests (27) queued at the first queue (28) may be scheduled through the disk operation queue (32).

The hard disk accesses the items of the disk operation queue (32), that is, the queued read operations (29) and read operations (27) and performs the corresponding tasks (write data into the hard disk or retrieve data from said hard disk). When a disk operation (that is, a read or write operation in the hard disk) is completed (33), the disk operation scheduler may queue more operations in the disk operation queue (32), prioritizing read requests (29). All the queues of the object persistence manager (12) are FIFO queues.

Since requests queued at the object persistence manager (12) may correspond to web content of different sizes, the disk operation scheduler (31) converts these requests into disk operations with a fixed size, that is, disk operations that retrieve or write a fixed number of bits. Also, since write requests (27) can be infinitely delayed in the first queue (28), the object persistence manager (12) periodically checks if the web content related to the write request (27) is expired. If the web content is expired or is close to be expired, the write request (27) is cancelled by the object persistence manager (12), avoiding unnecessary write operations.

The disclosed scheduling architecture and policies allow to prioritize users requests for web content cached in the hard disk versus data storing operations issued by the web caching object pool (10), and therefore improving the overall experience of the user, who perceives a shorter delay when asking for data cached in the hard disk. Also, the method and system of the invention may be advantageously combined with any other web caching optimizing technique regarding hardware, allocation criteria, or object replacement techniques.

## Claims

1. Method of caching web content in a communication node comprising a hard disk memory, said communication node being configured to schedule read requests (27) and write requests (28) of web content in the hard disk, **characterized in that** the method comprises:
- queuing write requests (27) in a first queue (28);
- queuing read requests (29) in a second queue (30); having the second queue (30) a greater priority than the first queue (28);
- monitoring a data throughput level of the hard disk;
- scheduling write requests (27) queued in the first queue (28) only if the monitored data throughput is below a first threshold
- scheduling read requests (29) queued in the second queue (30) as a function of the monitored data throughput of the hard disk.

2. Method according to claim 1 **characterized in that** the method further comprises scheduling multiple write requests (27) queued in the first queue (28) if the monitored saturation level of the hard disk is below a second threshold.

3. Method according to any of the previous claims **characterized in that** write requests (27) queued in the first queue (28) are divided into data blocks with a fixed size.

4. Method according to any of the previous claims **characterized in that** the first queue (28) is a first in first out queue.

5. Method according to any of the previous claims **characterized in that** the method further comprises checking an expiration of write requests (27) queued in the first queue (28) and removing expired write requests (27) from the first queue (28).

6. System of caching web content in a communication node comprising a hard disk memory, said communication node being configured to schedule read requests (27) and write requests (28) of web content in the hard disk, **characterized in** the system further comprises:
- first scheduling means (10) configured to queue write requests (27) in a first queue (28) and to queue read requests (29) in a second queue (30);
- monitoring means (11) adapted to monitor a data throughput of the hard disk;
- second scheduling means (12) configured to schedule write requests (27) queued in the first queue (28) only if the monitored data throughput is below a first threshold and to schedule read requests (29) queued in the second queue (20) as a function of the monitored data throughput of the hard disk, giving a greater priority to the second queue (30).

7. System according to claim 6 **characterized in that** the second scheduling means (12) are further configured to schedule multiple write requests (27) queued in the first queue (28) if the monitored saturation level of the hard disk is below a second threshold.

8. System according to any of claims 6 to 7 **characterized in that** write requests (27) queued in the first queue (28) are divided into data blocks with a fixed size.

9. System according to any of claims 6 to 8 **characterized in that** the first queue (28) is a first in first out queue.

10. System according to any of claims 6 to 9 **characterized in that** the second scheduling means (12) are further configured to check an expiration of write requests (27) queued in the first queue (28) and to remove expired write requests (27) from the first queue.

11. Computer program comprising computer program code means adapted to perform the steps of the method according to any of claims 1 to 5 when said program is run on a computer, a digital signal processor, a field-programmable gate array, an application-specific integrated circuit, a micro-processor, a micro-controller, or any other form of programmable hardware.

## Patentansprüche

1. Verfahren zum Zwischenspeichern von Web-Inhalten in einem Kommunikationsknoten, welcher einen Festplattenspeicher aufweist, wobei der Kommunikationsknoten zum Planen von Leseanfragen (27) und Schreibanfragen (28) von Web-Inhalten auf die Festplatte konfiguriert ist,
**dadurch gekennzeichnet, dass** die Methode aufweist:
- Einreihen von Schreibanfragen (27) in eine erste Warteschlange (28);
- Einreihen von Leseanfragen (29) in eine zweite Warteschlange (30), wobei die zweite Warteschlange (30) eine größere Priorität als die erste Warteschlange (28) hat;
- Überwachen eines Datendurchsatzniveaus der Festplatte;
- Planen von Schreibanfragen (27), welche in der ersten Warteschlange (28) warten, nur wenn der überwachte Datendurchsatz unterhalb eines ersten Schwellwertes ist;
- Planen von Leseanfragen (29), welche in der zweiten Warteschlange (30) warten als eine Funktion des überwachten Datendurchsatzes der Festplatte.

2. Verfahren nach Anspruch 1,
**dadurch gekennzeichnet, dass** das Verfahren des Weiteren aufweist: Planen von Mehrfachschreibanfragen (27), welche in der ersten Warteschlange (28) warten, wenn das überwachte Sättigungsniveau der Festplatte unterhalb eines zweiten Schwellwertes ist.

3. Verfahren nach einem der vorgehenden Ansprüche,
**dadurch gekennzeichnet,**
**dass** die Schreibanfragen (27), welche in der ersten Warteschlange (28) warten, in Datenblöcke mit einer festen Größe unterteilt werden.

4. Verfahren nach einem der vorgehenden Ansprüche,
**dadurch gekennzeichnet,**
**dass** die erste Warteschlange (28) eine first-in first-out Warteschlange ist.

5. Verfahren nach einem der vorgehenden Ansprüche,
**dadurch gekennzeichnet, dass** das Verfahren des Weiteren aufweist: Überprüfen eines Verfalls von Schreibanfragen (27), welche in der ersten Warteschlange (28) warten und Entfernen von verfallenen Schreibanfragen (27) aus der ersten Warteschlange (28).

6. Verfahren zum Zwischenspeichern von Web-Inhalten in einem Kommunikationsknoten, welcher einen Festplattenspeicher aufweist, wobei der Kommunikationsknoten konfiguriert ist, Leseanfragen (27) und Schreibanfragen (28) von Web-Inhalten auf die Festplatte zu planen,
**dadurch gekennzeichnet, dass** das System des Weiteren aufweist:
- erste Planungsmittel (10), welche konfiguriert sind, um Schreibanfragen (27) in eine erste Warteschlange (28) einzureihen und um Leseanfragen (29) in eine zweite Warteschlange (30) einzureihen;
- Überwachungsmittel (11) ausgestaltet zum Überwachen des Datendurchsatzes der Festplatte;
- zweite Planungsmittel (12), die konfiguriert sind, um Schreibanfragen (27), welche in der ersten Warteschlange (28) warten, nur zu planen, wenn der überwachte Datendurchsatz unterhalb eines ersten Schwellwertes ist und um Leseanfragen (29), welche in der zweiten Warteschlange (20) warten, als Funktion des überwachten Datendurchsatzes der Festplatte zu planen, wobei der zweiten Warteschlange (30) eine größere Priorität eingeräumt wird.

7. System nach Anspruch 6,
**dadurch gekennzeichnet,**
**dass** die zweiten Planungsmittel (12) des Weiteren konfiguriert sind, um mehrfach Schreibanfragen (27), welche in der ersten Warteschlange (28) warten, zu planen, wenn das überwachte Sättigungsniveau der Festplatte unterhalb eines zweiten Schwellwertes ist.

8. System nach einem der Ansprüche 6 bis 7,
**dadurch gekennzeichnet,**
**dass** Schreibanfragen (27), welche in der ersten Warteschlange (28) warten, in Datenblöcke mit einer festen Größe unterteilt werden.

9. System nach einem der Ansprüche 6 bis 8,
**dadurch gekennzeichnet,**
**dass** die erste Warteschlange (28) eine first-in first-out Warteschlange ist.

10. System nach einem der Ansprüche 6 bis 9,
**dadurch gekennzeichnet,**
**dass** die zweiten Planungsmittel (12) des Weiteren konfiguriert sind, um Verfall von Schreibanfragen (27), welche in der ersten Warteschlange (28) warten, zu überprüfen und abgelaufene Schreibanfragen (27) aus der ersten Warteschlange zu entfernen.

11. Computerprogramm, welches Computerprogramm-Codemittel aufweist, welche ausgestaltet sind, um die Schritte des Verfahrens nach einem der Ansprüche 1 bis 5 auszuführen, wenn das Programm auf einem Computer, einem digitalen Signalprozessor, einem Field-Programmalbe Gate Array, einer anwendungsspezifischen integrierten Schaltung, einem Mikroprozessor, einem Mikrocontroller oder einer anderen Form von programmierbarer Hardware läuft.

## Revendications

1. Un procédé de mise en mémoire tampon d'un contenu web dans un noeud de communication comprenant une mémoire sur disque dur, ledit noeud de communication étant configuré de façon à planifier des demandes de lecture (27) et des demandes d'écriture (28) d'un contenu web dans le disque dur, **caractérisé en ce que** le procédé comprend :
- la mise en file d'attente de demandes d'écriture (27) dans une première file d'attente (28),
- la mise en file d'attente de demandes de lecture (29) dans une deuxième file d'attente (30), la deuxième file d'attente (30) possédant une priorité plus élevée que la première file d'attente (28),
- la surveillance d'un niveau de débit de données du disque dur,
- la planification de demandes d'écriture (27) mises en file d'attente dans la première file d'attente (28) uniquement si le débit de données surveillé se situe sous un premier seuil,
- la planification de demandes de lecture (29) mises en file d'attente dans la deuxième file d'attente (30) sous la forme d'une fonction du débit de données surveillé du disque dur.

2. Le procédé selon la revendication 1 **caractérisé en ce que** le procédé comprend en outre la planification d'une pluralité de demandes d'écriture (27) mises en file d'attente dans la première file d'attente (28) si le niveau de saturation surveillé du disque dur se situe sous un deuxième seuil.

3. Le procédé selon l'une quelconque des revendications précédentes **caractérisé en ce que** des demandes d'écriture (27) mises en file d'attente dans la première file d'attente (28) sont divisées en blocs de données d'une taille fixe.

4. Le procédé selon l'une quelconque des revendications précédentes **caractérisé en ce que** la première file d'attente (28) est une file d'attente premier entré premier sorti.

5. Le procédé selon l'une quelconque des revendications précédentes **caractérisé en ce que** le procédé comprend en outre la vérification d'une expiration des demandes d'écriture (27) mises en file d'attente dans la première file d'attente (28) et la suppression des demandes d'écriture expirées (27) de la première file d'attente (28).

6. Un système de mise en mémoire tampon d'un contenu web dans un noeud de communication comprenant une mémoire sur disque dur, ledit noeud de communication étant configuré de façon à planifier des demandes de lecture (27) et des demandes d'écriture (28) d'un contenu web dans le disque dur, **caractérisé en ce que** le système comprend en outre :
- un premier moyen de planification (10) configuré de façon à mettre en file d'attente des demandes d'écriture (27) dans une première file d'attente (28) et à mettre en file d'attente des demandes de lecture (29) dans une deuxième file d'attente (30),
- un moyen de surveillance (11) adapté de façon à surveiller un débit de données du disque dur,
- un deuxième moyen de planification (12) configuré de façon à planifier des demandes d'écriture (27) mises en file d'attente dans la première file d'attente (28) uniquement si le débit de données surveillé se situe sous un premier seuil et à planifier des demandes de lecture (29) mises en file d'attente dans la deuxième file d'attente (20) sous la forme d'une fonction du débit de données surveillé du disque dur, en donnant une priorité plus élevée à la deuxième file d'attente (30).

7. Le système selon la revendication 6 **caractérisé en ce que** le deuxième moyen de planification (12) est configuré en outre de façon à planifier une pluralité de demandes d'écriture (27) mises en file d'attente dans la première file d'attente (28) si le niveau de saturation surveillé du disque dur se situe sous un deuxième seuil.

8. Le système selon l'une quelconque des revendications 6 à 7 **caractérisé en ce que** les demandes d'écriture (27) mises en file d'attente dans la première file d'attente (28) sont divisées en blocs de données d'une taille fixe.

9. Le système selon l'une quelconque des revendications 6 à 8 **caractérisé en ce que** la première file d'attente (28) est une file d'attente premier entré premier sorti.

10. Le système selon l'une quelconque des revendications 6 à 9 **caractérisé en ce que** le deuxième moyen de planification (12) est configuré en outre de façon à vérifier une expiration de demandes d'écriture (27) mises en file d'attente dans la première file d'attente (28) et à supprimer des demandes d'écriture expirées (27) de la première file d'attente.

11. Un programme informatique contenant un moyen de code de programme informatique adapté de façon à exécuter les étapes du procédé selon l'une quelconque des revendications 1 à 5 lorsque ledit programme est exécuté sur un ordinateur, un processeur de signaux numériques, un réseau prédiffusé programmable par l'utilisateur, un circuit intégré spécifique à une application, un microprocesseur, un microcontrôleur, ou toute autre forme de matériel informatique programmable.
